(19) Europäisches Patentamt

European Patent Office

Office européen des brevets

(11) **EP 3 571 236 B1**

(12) **EUROPEAN PATENT SPECIFICATION**

(45) Date of publication and mention
of the grant of the patent:
**11.08.2021 Bulletin 2021/32**

(51) Int Cl.:
**C08F 216/16** *(2006.01)*     **C09D 11/106** *(2014.01)*
**C09D 11/326** *(2014.01)*     **C08F 8/32** *(2006.01)*

(21) Application number: **18700774.5**

(22) Date of filing: **23.01.2018**

(86) International application number:
**PCT/EP2018/051586**

(87) International publication number:
**WO 2018/134438 (26.07.2018 Gazette 2018/30)**

(54) **POLYMERIC DISPERSANT, DISPERSION THEREWITH AND PRINTING METHOD**

POLYMERES DISPERGIERMITTEL, DISPERSION DAMIT UND DRUCKVERFAHREN

DISPERSANT POLYMÈRE, DISPERSION AVEC CELUI-CI ET PROCÉDÉ D'IMPRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2017 BE 201705034**

(43) Date of publication of application:
**27.11.2019 Bulletin 2019/48**

(73) Proprietor: **Xeikon Manufacturing N.V.
2500 Lier (BE)**

(72) Inventors:
• **VAN GAENS, Wouter Jeroom Maria
2570 Duffel (BE)**
• **DEROOVER, Geert Gaston Paul
2500 Lier (BE)**

• **DEPREZ, Lode Erik Dries
9185 Wachtebeke (BE)**
• **OP DE BEECK, Werner Jozef Johan
2580 Putte (BE)**
• **VAN REMORTEL, Mathias Jo Bert
2275 Wechelderzande (BE)**

(74) Representative: **D'Halleweyn, Nele Veerle Trees
Gertrudis
Arnold & Siedsma
Bezuidenhoutseweg 57
2594 AC The Hague (NL)**

(56) References cited:
EP-A1- 1 449 893     EP-A2- 0 087 988
EP-A2- 0 949 321     EP-A2- 1 650 269
EP-A2- 1 650 273     WO-A1-03/027154
WO-A1-2015/142832

**Description**

FIELD OF THE INVENTION

The invention relates to a polymeric dispersant being a copolymer.
The invention also relates to a method of preparing a polymeric dispersant by means of radical copolymerisation.
The invention further relates to the use of the polymeric dispersant as a dispersing agent in a ink dispersion comprising an aqueous and/or alcoholic solvent, and to a dispersion comprising colorant particles comprising colorant, an alcoholic and/or aqueous carrier liquid and the polymeric dispersant.
The invention further relates to the use of the dispersion in inkjet printing.

BACKGROUND OF THE INVENTION

Dispersions for use in a printing process are typically stabilized by means of one or more dispersing agents. The stabilisation makes that the colorant particles do not flocculate together in an uncontrolled manner in a carrier liquid, and particularly prior to transfer to the substrate or prior to a heating step typically referred to as fusing. For different printing processes, different combinations of colorant particles and carrier liquids are used. In inkjet printing processes, the carrier liquid is usually aqueous and the colorant particles typically predominantly consist of pigment or another colorant. Inkjet printing processes may involve direct printing on a substrate, but may alternatively use an intermediate member and a transfer step.
Dispersing agents used in such printing processes have various roles. First of all, these should prevent that colorant particles flocculate and that the dispersion is thus destabilized prior to use or during its use but before the step wherein the dispersion is converted into a film. Secondly, the dispersing agents should not hinder film formation and adhesion to the substrate, but rather facilitate this transformation step.
EP1449893A1 discloses such a dispersion being an electrostatic inkjet ink composition. The dispersion comprises pigment particles that comprise pigment and resin in a weight ratio of 1:2 and a non-polar non-aqueous solvent. As is specified in Example 1, the resin and the pigment are mixed in a blender and then melt kneaded, followed by further pulverization. Thereafter, a pigment dispersant is added and is for instance a non-ionic surfactant. Styrene-maleic acid resin, styrene-acrylic acid resin, rosins, urethane- and polyester-based polymer dispersants are preferred examples. The dispersion furthermore comprises a charge control agent that is soluble in a non-aqueous solvent and is a so-called half-amide maleic acid copolymer containing a first repeating unit derived from the polymerisation of maleic acid and a second monomer being an ethylenically unsaturated monomer with the structure $YHC=CH_2$. The first unit comprises an acrylate substituent (-(C=O)-OM) and an acrylamide substituent (-(C=O)-NR$_1$R$_2$), with M a hydrogen, metal, ammonium salt or quaternary ammonium, and $R_1$, $R_2$ any alkyl, aryl, heterocyclic and optionally cyclised. The charge control agent is thus a copolymer obtainable and obtained by copolymerizing at least a first and a second monomer, wherein the first monomer is maleic anhydride that is at least partially converted into (N-substituted) maleimide, and the second monomer is ethylenically unsaturated.
While this known dispersion is specified to be an inkjet ink composition, it is chemically rather a type of liquid toner composition. As known in the art, liquid toner compositions include a non-polar carrier liquid and pigment particles including pigment and binder resin. An inkjet ink composition based on an aqueous and/or alcoholic carrier liquid differs significantly thereof. First of all, the polarity of the carrier liquid is much higher, such that a charge control agent (if any) must function against a relatively high background polarity. Secondly, the dispersant needs other functionality. A styrene-maleic acid resin does not have a match with the polar alcoholic and/or aqueous carrier liquid, and hence will not work as a dispersant. Furthermore, the ratio of 1:2 between pigment and binder resin and the manufacturing process indicate that the binder resin forms the primary surface of the pigment particle. In aqueous and/or alcoholic inkjet compositions, the pigment is not encapsulated in binder resin, but rather modified or unmodified.
Particularly for such inkjet composition comprising optionally modified pigment in an aqueous and/or alcoholic carrier liquid, it is desirable to provide a polymer dispersant that appropriately disperses the pigment into the carrier liquid. More particularly, it is desirable to obtain a synthetically versatile group of dispersants, such that the polarity may be tuned or varied to match different pigments and/or different (alcoholic and/or aqueous) carrier liquids. EP1650269A2 and EP1650273A2 disclose a polymeric colorant, ink compositions comprising a polymeric colorant and a method of forming a polymeric colorant. Said polymeric colorant comprising a pigment; a polymer covalently coupled to said pigment; a dye covalently attached to said polymer; and a dispersant covalently attached to at least one of said pigment, said polymer, or said dye; wherein said dye covalently attached to said polymer includes a reactant coupled to said dye and to said polymer. Said polymer comprises a styrene-maleic anhydride copolymer; said reactant includes aminoethanethiol; and said dye includes a dye derivative.

## SUMMARY OF THE INVENTION

It is therefore an object of the invention to provide an improved polymer dispersant that is suitable for use in aqueous and/or alcoholic inkjet dispersions, and that on the one hand stabilizes the dispersion during storage and during use prior to film formation and on the other hand facilitates or at least does not hinder film formation and adhesion to the substrate.

It is another object of the invention to provide a method of preparing such a polymer dispersant. It is again another object of the invention to provide a use of the polymer dispersant as a dispersing agent in inkjet dispersions. It is also an object to provide such dispersions comprising the said polymer dispersant.

It is a further object to provide a use of such improved inkjet dispersions based on an aqueous and/or alcoholic solvent, and particularly to provide a method of digitally printing, wherein said dispersion is used.

According to a first aspect, the invention relates to a polymeric dispersant, which is a copolymer comprising first and second repeating units each carrying a substituent, of which the second units are N-substituted maleimide units, which copolymer is obtainable by copolymerizing at least a first monomer being an ethylenically unsaturated monomer and a second monomer chosen from a N-substituted maleimide compound and a maleic anhydride compound, which compounds are optionally substituted at a 2- and/or a 3-position, and, in case of a maleic anhydride compound, by subsequently converting at least part of the resulting maleic anhydride units to N-substituted maleimide units, wherein the second repeating units comprises a first substituent having a substantially non-polar chain and wherein the first repeating units comprises a second, more polar substituent, which comprises at least one heteroatom chosen from sulphur (S) and oxygen (O).

According to a second aspect, the invention relates to a method of preparing a polymeric dispersant, comprising the steps of

-   Providing at least a first monomer being an ethylenically unsaturated monomer with the structure $YHC=CH_2$, a second monomer being a maleic anhydride compound, which is optionally substituted at a 2- and/or 3-position, and an amino-compound with the structure $Z-NH_2$, wherein Z is a first substituent having a substantially non-polar chain and Y is a second substituent being more polar than the first substituent and comprises at least one heteroatom chosen from sulphur (S) and oxygen (O);
-   copolymerizing the first monomer and the second monomer, and
-   converting at least part of the maleic anhydride into a substituted maleimide by reaction with the amino-compound, wherein the at least partial conversion of the maleic anhydride may occur either before copolymerisation or after copolymerisation, in which case the maleic anhydride to be converted is present as maleic anhydride units in the copolymer.

According to a third aspect, the invention relates to a inkjet dispersion comprising colorant, at least one dispersing agent adsorbed on a surface of the colorant and a polar carrier liquid, wherein the polymeric dispersant of the invention is used as the dispersing agent. The polar carrier liquid is particularly an aqueous or alcoholic carrier liquid, or a mixture thereof. Preferred alcohols include C1-C4 monoalcohols such as ethanol, propanol and isopropyl alcohol; aliphatic polyalcohols, preferably C1-C6 alcohols, such as ethylene glycol, propylene glycol, diethylene glycol, glycerol 1,4 butanediol, 1,2,4-butanetriol, 1,5-pentanediol, dipropylene glycol and ethers thereof.

Preferably, the alcohol is present as a co-solvent of water, wherein the alcohol is more preferably present (relative to the water-alcohol mixture) in at most 70%, or at most 50% or even at most 33% by weight. The colorant may comprise a pigment (inorganic) and/or an organic dye. The pigment or dye may be modified so as to improve its dispersability and/or other properties. Such colorants are commercially available.

According to a further aspect, use is made of the dispersion, particularly, in a process of digitally printing.

It was found that the copolymers had excellent properties for use as dispersing agents; it has a good dispersion stability during preparation and storage and a good performance. According to the invention, the second, more polar substituent comprises at least one heteroatom chosen from oxygen and sulphur. The preferred dispersion of this embodiment is an ink dispersion suitably for inkjet and other applications. Herein the colored particles typically do not contain a binder resin that keeps the colorant together, such as in EP1449893A1. The second, more polar substituent is configured for interaction with the alcoholic and/or aqueous carrier liquid, while the first substituent is configured for interaction with the colorant. For sake of clarity, it is added that the term'interaction' is understood to refer to physical bonding such as adsorption or chemical bonding. Physical bonding is preferred, but chemical bonding is not excluded. Even in case of chemical bonding, it isforeseen that physical bonding will also play a role.

It is not excluded that the substituent comprises more than 1 heteroatom. Preferably, the heteroatom is present in a group chosen from at least one of a thiol, a sulfonyl, sulfinyl, a sulfoxylamide, an ether, an alcohol, and an oligo-(alkyleneoxide), wherein the alkylene is chosen from ethylene, propylene and butylenes.

Preferably, use is made of oligo(alkyleneoxides) for the second substituent, wherein alkylene is chosen from ethylene, propylene and butylene and/or mixtures thereof. Such a choice is deemed particularly suitable, when the carrier liquid is aqueous and/or alcoholic. This type of carrier liquids is conventionally used for inkjet printing. Inkjet printing may be carried out by ejecting, typically through nozzles, the dispersion directly onto a substrate or other recording medium. Alternatively, inkjet printing may be carried out by ejecting the dispersion onto a first, usually rotating member, and subsequent transfer from the rotating member to a substrate. The latter indirect inkjet printing may use a transfer technique known from the field of liquid toner dispersions, for instance by means of a fusing step either on a transfer member or on the substrate.

More preferably, the oligo(alkyleneoxide) used as second substituent comprises both propylene oxide and ethylene oxide units. A suitable number of ethylene oxide units is 5-50 and a suitable number of propylene oxide units is 10-70. Preferably, the number of propylene oxide units is higher than the number of ethylene oxide units. The molecular mass of the second substituent is preferably in the range of 500-5000 g/mol, such as 600-4000 g/mol, more preferably 1000-3000 g/mol.

According to a further embodiment, either the first or the second substituent, and more preferably the substituent coupled to the maleimide unit, contains a photodecomposable group. More particularly the photodecomposable group is a group that will under irradiation with radiation of a suitable wavelength, more particularly ultraviolet radiation, decompose into a first and a second portion. By means of the photodecomposition, a structural modification of the dispersing agent is achieved, and therewith a change in ability to disperse compounds. Suitable photodecomposable groups are known from the application EP 14 174 812.9.

In a suitable embodiment, the first monomer is a so-called electron-rich monomer, and is more particularly chosen from vinyl ethers, vinyl esters, vinyl amides. This choice is beneficial in order to form the copolymer with good yield. Moreover, it allows integration of a suitable chain into the copolymer in a synthetically versatile manner. More particularly, the first monomer has the formula $YHC=CH_2$, wherein $Y = OR_1$, $OC(=O)-R_1$, $NR_2C(=O)R_1$ and constitutes the second substituent,

The use of an electron-rich monomer is particularly beneficial, since the second monomer is a so-called electron-poor monomer. As a consequence, there is an inherent tendency to form bonds between molecules of the first and the second monomer. Hence, the distribution of the first and second monomer within the copolymer is more regular, i.e. typically a first monomer is bonded to molecules of the second monomer, and thus suitably at least moderately alternating as will be explained in more detail hereinafter.

In one preferred embodiment the first repeating unit contains the first substituent and the second repeating unit contains the second substituent. Thus, the first repeating unit is provided with a - first - substituent that enhances anchoring to the colorant particle. The second repeating unit is suitable for stabilisation of the pigment into the alcoholic and/or aqueous carrier liquidHerein the chains of the first substituent are substantially non-polar chains, i.e. wherein $R_1$ = $C_8$-$C_{24}$ alkyl, alkyl- or aryl-substituted alkyl, optionally substituted with a non-polar substituent such as halogen.The alkyl chain of the first subsituent is in one embodiment linear, and in another embodiment branched. One advantage hereof is that the polarity can be tuned by means of the degree of substitution to the second repeating unit.

In the present invention, the first monomer is provided with the second, more polar substituent. Examples of more polar substituents can be any substituent containing a heteroatom. Preferably, use is made of oligo(alkyleneoxides), wherein alkylene is chosen from ethylene, propylene and butylene and/or mixtures thereof. The first substituent is herein suitably non-polar, for instance alkyl or (aryl and/or alkyl)-substituted alkyl. Herein, the anchoring to the pigment can be tuned by means of the degree and the type of substitution to the second repeating unit.

In a preferred embodiment, the second monomer is a maleic anhydride compound that is, after polymerisation, at least partially converted to N-substituted maleimide, in a reaction with an amine, more particularly a substituted alkyl amine, as will be discussed hereinafter. Maleic anhydride is a versatile synthetic unit. The N-substituted maleimide includes a ring structure that is believed to improve adhesion to the colorant particles. The maleic anhydride compound is either maleic anhydride or a substituted maleic anhydride, such as 2-substituted maleic anhydride, 3-substituted maleic anhydride, 2,3-disubstituted maleic anhydride. The said substitutions may be chosen broadly, for instance from halogens, such as chloride, bromide, fluoride, alkyl, such as C1-C10 alkyl, preferably C1-C4 alkyl that is optionally substituted, alkylaryl. In the example that the polymerisation is carried out with a maleimide compound, this compound may be substituted in its 2- and/or 3-positions in a corresponding manner. While in this case, the starting compound is suitably the N-substituted maleimide that is substituted with the first substituent, it is not excluded that the substitution to the nitrogen atom is added or modified after polymerisation.

According to a further embodiment, the polymer dispersant contains maleic anhydride groups in addition to substituted maleimide groups. Suitably, the molar ratio of maleimide and maleic anhydride groups in the resulting copolymer is larger than 0.2, suitably larger than 0.5, preferably at least 1, preferably at least 2, more preferably at least 3, or even at least 4 or at least 9. The relative amount of maleic anhydride in the copolymer may be tuned and may depend on the type of colorant particle. In order to obtain formation of maleimides rather than maleamides, the conversion reaction is in one preferred embodiment a two-step method itself; in the first step, the amine is added to the polymer, suitably dropwise, and in the second step, the temperature is raised to an elevated temperature. Amides may be present as intermediates. Maleimides, which are ring-shaped, are deemed preferable over amides, in which the anhydride ring has been broken up to separate side chains; it is believed that the ring-shaped structure contributes to adhesion on the surface of the colorant particles.

In the present disclosure, it is further feasible that the second repeating unit (maleimide) is partially substituted with a second substituent and partially substituted with a first substituent. This may be done to tune the molar ratio between the first substituent and the second substituent. This molar ratio may deviate from the molar ratio between the first monomer and the second monomer in the resulting copolymer. For instance, the molar ratio between the first substituent and the second substituent is in the range of 0.25 to 4, more preferably in the range of 0.5 to 2, such as 0.7 to 1.4. Tuning of the molar ratio of the first and second substituent by conversion of available maleic anhydride units into substituted maleimide units is deemed appropriate. In this manner, the said molar ratio can be optimized, independent of the copolymerisation conditions.

Preferably, the first and the second monomers are chosen such that their copolymerisation parameters $r1$, $r2$ $\leq 1$. Preferably $r1$, $r2 \leq 0.5$. More preferably, the product of $r1 \times r2 \leq 0.1$. The copolymerisation parameter is a measure in polymer chemistry for the likelihood of forming bonds between either two molecules of the first monomer or molecules of the first and the second monomer. For $r_i = 0$ (i = 1, 2), a strictly alternating copolymer is formed. For $r_i = 1$, a statistical polymer is formed. For any value of $r_i$ between 0 and 1, the copolymer will be more or less alternating. If both $r_1$ and $r_2$ are below 1, there is a stronger tendency for reactions between the first and the second monomer, leading to alternation, such as a moderately alternating polymer.

It is the insight of the inventors that alternation of monomers is advantageous. The resulting copolymer may be strictly alternating, but also moderately alternating, i.e. anything between random and strictly alternating. The alternation provides a rather regular structure that is feasible of bonding to a surface of colorant particles. Furthermore, the alternation leads thereto that the substantially non-polar groups are arranged within the molecule at a sufficient distance to each other. This favours interaction with the non-polar groups with the molecules of the carrier liquid, rather than with each other. As well expressed by means of the copolymerisation parameters, there is no need for a strictly alternating polymer. Furthermore in experiments wherein an acrylate-based random copolymer was compared with the at least moderately alternating copolymer of the invention, while keeping the substituents substantially equal, it was found that the alternating copolymer had a significantly better performance. It is observed for sake of clarity that the alternating arrangement is deemed of more importance than the exchange of the acrylate groups by a combination of ether and maleimide groups.

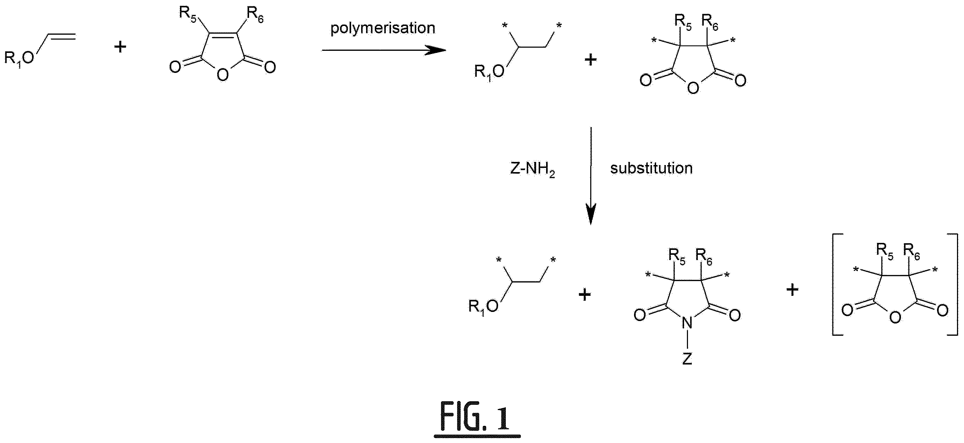

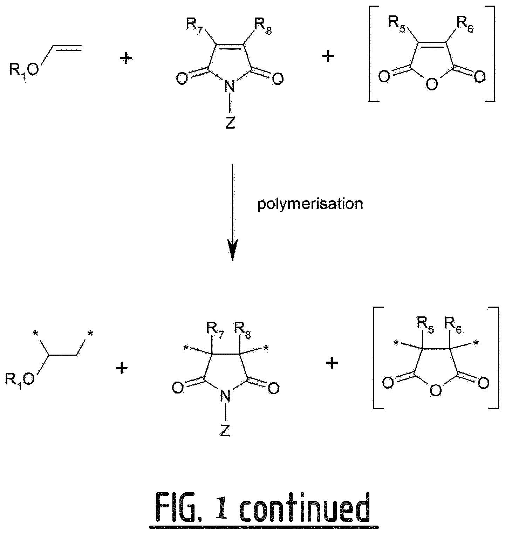

Therefore, in a further aspect, the invention relates to a polymeric dispersant, which is a copolymer comprising first and second repeating units each carrying a substituent, wherein the second units comprises a first substituent having a substantially non-polar chain and wherein the first units comprises a second, more polar substituent, and wherein the copolymer is an at least moderately alternating copolymer. The invention furthermore relates to a dispersion comprising colorant particles, a aqueous and/or alcoholic carrier liquid and such a polymeric dispersant which is at least moderately alternating copolymer comprising first and second repeating units each carrying a substituent, the second repeating unit comprises a first substituent having a substantially non-polar chain and wherein the first repeating unit comprises a second, more polar substituent. Any of the features described in the present disclosure in relation to the choice of the first and second substituents, the choice of the first and the second repeating unit, the combination of the substituents and the repeating units, as well as the preparation and composition of the dispersion and its use may also be combined with the aspects described here. Particularly, the at least moderately alternating structure may be defined in terms of copolymerisation parameters for the first and the second monomer, as will be discussed hereinbelow in more detail with reference to Figure 1.

Preferably, the copolymer has a weight-average molecular weight of 1,500-500,000 g/mol, more preferably in the range of 2,000 to 400,000 g/mol, such as 4,000-200,000 g/mol, or 5,000-100,000 g/mol. Such a molecular weight is deemed appropriate for the application in inkjet dispersions. The inventors believe that such a weight provides a chain length of the copolymer that is appropriate in relation to the size of the colorant particles.

In the preparation of the dispersion, suitably, a dispersion concentrate is prepared, which for instance includes 15-40wt% colorant particles. This concentrate may thereafter be diluted to arrive at a concentration in the range of 1.5-7 wt%. The concentration of dispersing agent is suitably 20-100wt%, preferably 25 to 75wt% based on the colorant (pigment) concentration .. It is believed by the inventors that the polymer dispersant is at least partially and preferably to a significant extent adsorbed to the surface of the colorant particles. However, it not excluded that a part of the polymer dispersant is dissolved or dispersed in the aqueous and/or alcoholic carrier liquid separately from the colorant particles.

Thus, in summary, the invention relates to a polymeric dispersant having a maleimide repeating unit with a substituent and an ethylenic repeating unit with a substituent. A first of said substituents is substantially non polar and the second substituent is more polar than the first substituent. In the present invention the first substituent is coupled to the maleimide repeating unit, and in another embodiment of the present disclosure, it is coupled to the ethylenic repeating unit. Furthermore, maleic anhydride units may be present in addition to second, N-substituted maleimide units. It is furthermore not excluded that the copolymer is obtained by polymerizing more than two monomers, either to obtain a copolymer that is branched, or end groups based on the initiator used for the radical copolymerisation, as known per se in the art. The copolymer is preferably a substantially alternating polymer of first (and any optional further) units on the one hand and second units on the other hand. Further implementations will be apparent from the foregoing description, the examples and the claims. For sake of clarity, it is observed that in the context of the present application, the terms 'second repeating unit based on maleimide', 'maleimide repeating unit' refer to units in the polymer that are structurally based on the specified monomer, but need not be synthetically prepared from the maleimide monomer.

BRIEF INTRODUCTION OF FIGURES

These and other aspects of the invention will be further elucidated with reference to the Figures and on the basis of several examples, wherein:

Fig. 1 shows the reaction equations for the synthesis of the polymeric dispersant of the invention.

DETAILED DESCRIPTION OF ILLUSTRATED EMBODIMENTS

The Figures are not drawn to scale and purely diagrammatical in nature. Equal reference numerals in different Figures refer to equal or corresponding features.

Fig. 1 diagrammatically shows a reaction equation for the preparation of the polymeric dispersant of the invention. Fig. 1 shows two different reaction protocols to arrive at the polymer dispersant.. In the first step, the ethylenically unsaturated compound (first monomer), herein more specifically identified as a vinyl ether is reacted with maleic anhydride (second monomer). Preferably, the molar ratio of the second monomer to the first monomer is larger than 1, at least in the resulting polymer, as a consequence of synthetic conditions.

After the polymerisation, the said polymer of maleic anhydride and vinyl ether or other second monomer is brought in contact with an amine $ZNH_2$, to form maleimide groups. The extent of conversion of the maleic anhydride groups may be chosen so as to obtain suitable molar ratios of first substituents $OR_1$ and second substituents Z.

According to a second protocol shown in Figure 1, a process is used, wherein conversion occurs before polymerisation; i.e. the polymerisation involves a copolymerisation of maleimide and a first monomer, herein illustrated as a vinyl ether compound. The maleimide is suitably obtained from maleic anhydride. It is feasible, but not necessary that maleic anhydride is present as a further monomer according to this second protocol. The optional presence of maleic anhydride and/or repeating units based on maleic anhydride is indicated by means of brackets in Figure 1. Alternatively, the second step of the two-step reaction may be carried out by using more than one amine $Z_1NH_2$ and $Z_2NH_2$. This leads to the presence of two different substituted maleimide groups within the polymer and optionally any maleic anhydride groups.

Furthermore, $R_5$, $R_6$, $R_7$ and $R_8$ are all and independently chosen from hydrogen, halogen, alkyl and substituted alkyl. The choice of hydrogen and/or lower alkyl, such as methyl, ethyl, propyl is preferred, as larger substituents tends to reduce the rate of the polymerisation step. Particularly preferred are methyl and hydrogen, most preferably wherein any of $R_5$ and $R_6$ are hydrogen or wherein $R_5$ is hydrogen and $R_6$ is methyl, or alternatively wherein $R_5$ and $R_6$ are both methyl. In again an alternative embodiment, the groups $R_5$ and $R_6$ may form with the adjacent part of the maleimide or maleic anhydride a ring structure, that optionally contains a heteroatom such as oxygen. When both maleimide and maleic anhydride are present as monomers, the respective substituents $R_7$, $R_8$ and $R_5$, $R_6$ may differ from each other.

Moreover, while not preferred, it is not excluded that any further monomer is used in the synthesis. Such further monomer may be configured for 'dilution' of the number of first and/or second substituents, for integration of specific functionality into the copolymer, such as cross linking groups, for instance based on acrylamide or acrylic acid, groups that allow chemical binding to an inorganic surface, such as silanol-groups or to a binder resin, and furthermore also for tuning any desired degree of alternating behaviour.

Furthermore, the '*'-symbol indicates a bond with a further monomer within the polymer. In a strictly alternating copolymer, the maleic anhydride / maleimide unit and the vinylether unit alternate. In less completely alternating copolymers, the structure of the chain may vary more. According to a preferred embodiment of the invention, the copolymer is a moderately alternating copolymer. Typically, the extent to which a copolymer is an alternating copolymer is specified by so-called copolymerisation parameters.

Theoretically, copolymerization is as a type of chain polymerization in which two (or more monomers) are simultaneously polymerized. The two monomers enter into the copolymer in overall amounts determined by their relative concentrations and reactivities. Different types of copolymers exist: statistical, alternating, block and graft copolymers. The following section is described in Polymer Handbook, 4th Edition, Brandrup J., Immergut E.H., Grulke, E.A. (2003). In a statistical copolymer, the monomer distribution along the copolymer chain follows some statistical law, for example, Bernoullian (zero-order Markov) or first- or second-order Markov. A subclass of the statistical copolymers are the random copolymers. These are more particularly copolymers formed via Bernoullian processes, wherein the two monomer units are distributed randomly. In a strictly alternating copolymer the monomer units ($M_1$ and $M_2$) are present in equimolar amounts in a regular alternating distribution: $-M_1-M_2-M_1-M_2-M_1-M_2-$.

In practical terms, it is hard to avoid that strictly alternating copolymers also include randomness to a certain degree. These could be random fragments of the chain, or alternatively, fragments wherein the alternating order is less perfect. For instance, there may be alternation between a unit consisting of a single first monomer and a unit consisting of a plurality of second monomers. The number of second monomers could vary between 1 and 10 for instance, typically from 1 to 5. Rather than a unit of a single first monomer, there could be units with two, three or four first monomers. This degree of randomness will depend on the type of monomers, and may further depend on the reaction conditions, such as concentration of monomers, and temperature.

The extent of alternating copolymerisation has been studied and described by means of copolymerisation parameters. For a given combination of two monomers, copolymerization parameters can be experimentally derived. When one considers the propagation step of a copolymerization reaction, the propagating species (i.e. the monomer on the reactive end of the propagating polymer) can be $M_1^*$ or $M_2^*$. These propagating species can then react with another monomer, being $M_1$ or $M_2$, thereby leading to four possible different propagation steps:

$$M_1^* + M_1 \xrightarrow{\ k_{11}\ } M_1^*$$

$$M_1^* + M_2 \xrightarrow{\ k_{12}\ } M_2^*$$

$$M_2^* + M_1 \xrightarrow{\ k_{21}\ } M_1^*$$

$$M_2^* + M_2 \xrightarrow{\ k_{22}\ } M_2^*$$

where $k_{11}$ is the rate constant for a propagating chain ending in $M_1$ adding to monomer $M_1$, $k_{12}$ that for a propagating chain ending in $M_1$ adding to monomer $M_2$, $k_{21}$ that for a propagating chain ending in $M_2$ adding to monomer $M_1$ and $k_{22}$ that for a propagating chain ending in $M_2$ adding to monomer $M_2$. The aforementioned copolymerization parameters ($r_1$ and $r_2$) - or monomer reactivity ratios - are defined as the ratio of the rate constants of a propagating species reacting with the same monomer versus the reaction with the other monomer. Thus $r_1 = k_{11}/k_{12}$ and $r_2 = k_{22}/k_{21}$.

Copolymerizations can be classified into three types based on whether the product of the two copolymerisation parameters $r_1 \times r_2$ is unity, less than unity, or greater than unity. When the monomer reactivity product $r_1 \times r_2 = 1$, the copolymerization is termed ideal and a statistical (random) copolymer is formed. Herein, the two types of propagating species $M_1^*$ and $M_2^*$ show the same preference for adding one or the other of the two monomers.. When the two copolymerisation parameters are different, that is, $r_1 > 1$ and $r_2 < 1$ or $r_1 < 1$ and $r_2 > 1$, the copolymer will contain a larger proportion of the more reactive monomer in random placement. When the two copolymerisation parameters are smaller than 1 down to 0, the resulting copolymer is alternating to an increasing extent. A strictly alternating copolymer is obtained if the product $r_1 \times r_2 = 0$, wherein both $r_1$ and $r_2 = 0$-$0.1$. Moderate alternating behavior occurs when either (1) both $r_1$ and $r_2$ are small, preferably $r_1, r_2 \leq 0.4$, more preferably $r_1, r_2 \leq 0.3$, most preferably $r_1, r_2 \leq 0.2$ for instance $r_1 \times r_2 \leq 0.1$ or (2) one r value is small (for instance $r_1 \leq 0.5$, preferably $r_1 \leq 0.4$, more preferably $r_1 \leq 0.3$, most preferably $r_1 \leq 0.2$ and the other r is zero ($r_1 \times r_2 = 0$). The copolymer composition tends toward alternation but is not the perfectly alternating structure. According to the invention, the copolymer is suitably and substantially in the form of an alternating or moderate alternating copolymer of the structure A-B-A-B-A-B-, wherein A refers to the group obtained from the first monomer and B refers to the group obtained from the second monomer, and more particularly based on maleimide. Each of these groups A, B may contain more than one monomers. Suitably, the number of second monomers in the polymer dispersant is higher than the number of first monomers. Then, typically, the groups B may contain one or more second monomers, whereas the groups A typically contain one monomer. For sake of clarity, it is observed that the term 'monomer' herein refers to the structural entity, i.e. wherein the double bond has been converted to bonds to neighbouring monomers. The second monomer based on maleimide can be synthetically obtained in a two step method wherein the maleimide is only formed from maleic anhydride after polymerisation. Similarly in the context of the present application, the terms 'second repeating unit based on maleimide', 'maleimide repeating unit' refer to units in the polymer that are based on the specified monomer, but need not be synthetically prepared from the maleimide monomer.

More particularly, the copolymerisation parameter $r_1$ for maleic anhydride and maleates is in the range of 0-0.1 for a plurality of different second comonomers. Vinylic comonomers have a copolymerisation parameter $r_2$ of typically less than 0.2, and typically less than 0.1, when used in combination with maleic anhydride. Examples of such vinylic compounds are styrene, vinyl acetate, vinyl chloride, n-butyl vinyl ether, stilbene. On the other hand, acrylic compounds and acrylates with small side chains (such as methyl acrylates) typically have a copolymerisation parameter above 1.

EXAMPLES

**Test methods**

Stability test of ink

The viscosity of the dispersion is measured with a Haake Rheostress RS6000 operated in shear rate sweep from 0.1 to 3000 1/s at 25°C and expressed in mPas. The instrument is equipped with a cone/plate geometry type C60/1° and the gap is set to 0.052 mm. The viscosity at 3000 1/s is The particle size is measured with a Mastersizer 3000 from Malvern.

**Dispersing agents**

Example 1

Dispersing agent based on 2- ethylhexyl vinyl ether (2EHVE), maleic anhydride (MA) and amine (A1) with the formula MeO-$(PO)_{29}$-$(EO)_6$-NH2, wherein Me is methyl, PO is propylene oxide and EO is ethylene oxide. The amine has 29 propyleneoxide units and 6 ethyleneoxide units. This amine is commercially available from Huntsman under the tradename Jeffamine M2070.

(Method of polymerization A)

In a 1 liter flask, 2-ethylhexyl vinyl ether (40 g, 0.257 mol), commercially available from BASF, is heated to 110 °C and degassed under vacuum/nitrogen 3 times. In a separate flask, of maleic anhydride (25.2 g, 0.257 mol, 1 eq.) is dissolved in toluene (250 g). After dissolution, WAKO V-601 (1.00 g, 1wt%), commercially available from Wako Chemicals and being dimethyl 2,2'-azobis(2-methylpropionate), is added to the maleic anhydride solution which is subsequently degassed under vacuum/nitrogen. This solution is then added to the heated 2-ethylhexyl vinyl ether (under a nitrogen atmosphere) over a period of 30 minutes. After full addition of the maleic anhydride solution, the mixture is allowed to react further at 110 °C for an additional 15 minutes. When the polymerization is complete, a solution of the amine A1 (103 g, 0.05 mol, 1 eq.) in toluene (60 g) is added dropwise to the polymer solution at 110 °C over 15 minutes under a nitrogen atmosphere. Afterwards the temperature is raised to 175 °C and the reaction is continued for 60 minutes. Finally all volatiles are evaporated to yield the desired dispersing agent.

Ink preparation and composition

An pigment dispersion with a composition as mentioned in table 1 is prepared in a bead mill type PML from Buhler AG. The ink is milled with 0.3mm YTZ beads for 4 hours at at a speed of 10m/s

Table 1

| Pigment dispersion 1C | Weight % |
|---|---|
| Pigment type Heliogen Blue D7079 (*) | 15 |
| Dispersing agent example 1 | 15 |
| Water | 70 |
| (*) pigment commercially available from BASF | |

Afterwards this pigment dispersion is diluted to an ink composition with the following composition

Table 2:

| Inkjet 1C | Weight% |
|---|---|
| Pigment dispersion 1C | 20 |
| Surfactant : Byk 333 (*) | 0.75 |

(continued)

| Inkjet 1C | Weight% |
| --- | --- |
| Humectant: 2-pyrrolidone | 15 |
| Polyethyleenglycol 600 | 5 |
| Water | 59.25 |
| (*) commercially available from Byk. It is a polyether modified polydimethylsiloxane | |

The physical properties of the ink inkjet 1C are:

Viscosity (at 3000 1/s): 10.2 mPas
Particle size dv50: 125nm

Testresults

This ink composition inkjet 1C is filtered over of 1µm filter and charged into a DMP-2831 printer available from Fuji. No problems were observed during the print test.

**Claims**

1. Polymeric dispersant, which is a copolymer comprising first and second repeating units each carrying a substituent, which second repeating units are N-substituted and optionally further substituted maleimide units, which copolymer is obtainable by:

    - copolymerizing at least a first monomer being an ethylenically unsaturated monomer and a second monomer chosen from an N-substituted maleimide compound and a maleic anhydride compound, which compounds are optionally substituted at a 2- and/or 3-position, and
    - converting of at least part of resulting maleic anhydride units to N-substituted maleimide units, in case that the second monomer is maleic anhydride,

    wherein the second repeating unit comprises a first substituent having a substantially non-polar chain and wherein the first repeating unit comprises a second, more polar substituent that comprises at least one heteroatom chosen from sulphur (S) and oxygen (O).

2. The polymeric dispersant as claimed in claim 1, wherein the heteroatom is present as at least one of a thiol, a sulfonyl, sulfinyl, ether and oligo-(alkyleneoxide), wherein the alkylene is chosen from ethylene, propylene and butylenes.

3. The polymeric dispersant as claimed in claim 2, wherein the second substituent comprises an oligo-(alkyleneoxide), wherein the alkylene is chosen from ethylene, propylene and butylenes, wherein preferably the oligo-(alkyleneoxide) is a copolymer of ethylene oxide and propylene oxide.

4. The polymeric dispersant as claimed in claim 1-3, wherein the first monomer is chosen from the group of vinyl ethers, vinyl esters and vinyl amides.

5. The polymeric dispersant as claimed in claim 4, wherein the first monomer has formula (I)

$$YHC=CH_2 \qquad (I),$$

wherein
$Y = OR_1$, $OC(=O)\text{-}R_1$, $NR_2C(=O)R_1$, Y being the second, more polar substituent $R_1$ = substituted $C_1\text{-}C_{24}$ alkyl, $C_2\text{-}C_{24}$-cycloalkyl, $C_2\text{-}C_{24}$ alkene, $C_2\text{-}C_{24}$ cycloalkene, arylalkyl, alkoxyalkyl, wherein the substituent of the substituted (cyclo)alkyl, (cyclo)alkene, arylalkyl, alkoxyalkyl is preferably chosen from the group of amino, sulfonyl, sulfinyl, thiol, thioether, ether, which substituents may further contain one or more alkyl-groups, such as $C_1\text{-}C_4$ alkyl, oligo($C_2\text{-}C_4$-alkyleneoxide);

$R_2$ = $C_1$-$C_5$ alkyl.

6. The polymeric dispersant as claimed in claim 5, wherein $R_1$ is chosen from substituted $C_1$-$C_{10}$ alkyl, wherein the substituent of the substituted alkyl is preferably chosen from the group of $XR_3R_4$ and oligo($C_2$-$C_4$-alkyleneoxide), wherein X is chosen from amino, sulfonyl, sulfinyl, thiol, thioether, ether and $R_3$, $R_4$ is H or $C_1$-$C_4$ alkyl, and/or wherein $XR_3R_4$ together forms a cyclic group chosen from heteroalkyl and heteroaryl.

7. The polymeric dispersant as claimed in any of the preceding claims, wherein the first substituent to the maleimide is chosen from $C_8$-$C_{24}$ alkyl, alkyl- or aryl-substituted alkyl.

8. The polymeric dispersant as claimed in claim 1-7, wherein the second monomer is maleic anhydride and wherein the maleic anhydride is converted at least partially into N-substituted maleimide after the copolymerization, wherein the conversion of the maleic anhydride to N-substituted maleimide is preferably partial, and wherein at least 10%, preferably at least 30% and more preferably at least 50% or even at least 70% of the maleic anhydride groups in the copolymer are converted into maleimide.

9. The polymeric dispersant as claimed in any of the preceding claims, wherein part of the second repeating units is substituted with the first substituent and another part of the second repeating units is substituted with a second substituent.

10. The polymeric dispersant as claimed in any of the preceding claims, wherein the molar ratio between the second monomer and the first monomer is in the range of 0.3 to 7, preferably 0.9 to 5, more preferably 1 to 5.

11. Method of preparing a polymeric dispersant as claimed in any of the preceeding claims comprising the steps of

   - Providing at least a first monomer being an ethylenically unsaturated monomer with the structure YHC=CH$_2$, a second monomer being a maleic anhydride compound, which is optionally substituted at a 2- and/or 3-position, and an amino-compound with the structure Z-NH$_2$, wherein Z is a first substituent having a substantially non-polar chain and Y is a second substituent being more polar than the first substituent and comprises at least one heteroatom chosen from sulphur (S) and oxygen (O);
   - copolymerizing the first monomer and the second monomer, and
   - converting at least a part of maleic anhydride into a substituted maleimide by reaction with the amino-compound, wherein the at least partial conversion of the maleic anhydride may occur either before copolymerisation or after copolymerisation, in which latter case the maleic anhydride to be converted is present as maleic anhydride units in the copolymer.

12. Use of the polymeric dispersant as claimed in any of the claims 1- 10 as a dispersing agent in an inkjet dispersion having an aqueous and/or alcoholic carrier liquid.

13. Inkjet dispersion comprising colorant, an aqueous and/or alcoholic carrier liquid and a polymeric dispersant, as claimed in any of the claims 1-10, which is a copolymer comprising first and second repeating units each carrying a substituent, which second units are N-substituted maleimide units, which copolymer is obtainable by copolymerizing at least a first monomer being an ethylenically unsaturated monomer and a second monomer chosen from a maleimide compound and a maleic anhydride compound, which compounds are optionally substituted at a 2- and/or 3-position, and, in case that the second monomer is a maleic anhydride compound, converting at least part of the resulting maleic anhydride units to the second, N-substituted maleimide units, wherein the second repeating unit comprises a first substituent having a substantially non-polar chain and wherein the first repeating unit comprises a second, more polar substituent, which comprises at least one heteroatom chosen from sulphur (S) and oxygen (O), and preferably wherein the polymeric dispersant is at least partially adsorbed to a surface of the colorant, particularly prior and during printing until carrying out a fusing step.

14. Use of the dispersion as claimed in claim 13 for printing.

**Patentansprüche**

1. Polymeres Dispergiermittel, welches ein Copolymer mit ersten und zweiten Wiederholungseinheiten darstellt, die jeweils einen Substituenten enthalten, wobei die zweiten Wiederholungseinheiten N-substituierte und wahlweise weiter substituierte Maleimideinheiten darstellen, wobei das Copolymer erhältlich ist durch:

- Copolymerisieren von mindestens einem ersten Monomer als einem ethylenisch ungesättigten Monomer und einem zweiten Monomer, das aus einer N-substituierten Maleimidverbindung und einer Maleinsäureanhydridverbindung ausgewählt ist, wobei die Verbindungen wahlweise an einer Position 2 und/oder Position 3 substituiert sind, sowie
- Umwandeln von zumindest einem Teil von resultierenden Maleinsäureanhydrideinheiten in N-substituierte Maleimideinheiten, im Falle, dass das zweite Monomer Maleinsäureanhydrid ist,

wobei die zweite Wiederholungseinheit einen ersten Substituenten mit einer im Wesentlichen nicht polaren Kette umfasst, und wobei die erste Wiederholungseinheit einen zweiten, mehr polaren Substituenten umfasst, der mindestens ein aus Schwefel (S) und Sauerstoff (O) ausgewähltes Heteroatom umfasst.

2. Polymeres Dispergiermittel nach Anspruch 1, wobei das Heteroatom als mindestens eines aus einem Thiol, einem Sulfonyl, Sulfinyl, Ether und Oligo-(Alkylenoxid) vorliegt, wobei das Alkylen aus Ethylen, Propylen und Butylenen ausgewählt ist.

3. Polymeres Dispergiermittel nach Anspruch 2, wobei der zweite Substituent ein Oligo-(Alkylenoxid) enthält, wobei das Alkylen aus Ethylen, Propylen und Butylenen ausgewählt ist, wobei das Oligo-(Alkylenoxid) vorzugsweise ein Copolymer aus Ethylenoxid und Propylenoxid ist.

4. Polymeres Dispergiermittel nach Anspruch 1 bis 3, wobei das erste Monomer aus der Gruppe von Vinylethern, Vinylestern und Vinylamiden ausgewählt ist.

5. Polymeres Dispergiermittel nach Anspruch 4, wobei das erste Monomer die Formel (I)

$$YHC=CH_2 \qquad (I)$$

aufweist,
wobei
Y = $OR_1$, $OC(=O)$-$R_1$, $NR_2C(=O)R_1$, wobei Y der zweite, mehr polare Substituent $R_1$ = substituiertes $C_1$-$C_{24}$ Alkyl, $C_2$-$C_{24}$-Cycloalkyl, $C_2$-$C_{24}$ Alken, $C_2$-$C_{24}$ Cycloalken, Arylalkyl, Alkoxyalkyl ist, wobei der Substituent des substituierten (Cyclo)Alkyl, (Cyclo)Alken, Arylalkyl, Alkoxyalkyl vorzugsweise aus der Gruppe von Amino, Sulfonyl, Sulfinyl, Thiol, Thioether, Ether ausgewählt ist, welche Substituenten weiterhin eine oder mehrere Alkylgruppen wie $C_1$-$C_4$ Alkyl, Oligo($C_2$-$C_4$-Alkylenoxid), $R_2$ = $C_1$-$C_5$ Alkyl enthalten können.

6. Polymeres Dispergiermittel nach Anspruch 5, wobei $R_1$ aus substituiertem $C_1$-$C_{10}$ Alkyl ausgewählt ist, wobei der Substituent des substituierten Alkyls vorzugsweise aus der Gruppe von $XR_3R_4$ und Oligo($C_2$-$C_4$-Alkylenoxid) ausgewählt ist, wobei X aus Amino, Sulfonyl, Sulfinyl, Thiol, Thioether, Ether ausgewählt ist und $R_3$, $R_4$ H oder $C_1$-$C_4$ Alkyl ist, und/oder wobei $XR_3R_4$ zusammen eine aus Heteroalkyl und Heteroaryl ausgewählte zyklische Gruppe bildet.

7. Polymeres Dispergiermittel nach einem der vorhergehenden Ansprüche, wobei der erste Substituent für das Maleimid aus $C_8$-$C_{24}$ Alkyl, Alkyl- oder Aryl-substituiertem Alkyl ausgewählt ist.

8. Polymeres Dispergiermittel nach Anspruch 1 bis 7, wobei das zweite Monomer Maleinsäureanhydrid ist und wobei das Maleinsäureanhydrid nach der Copolymerisierung zumindest teilweise in N-substituiertes Maleimid umgewandelt wird, wobei die Umwandlung des Maleinsäureanhydrids in N-substituiertes Maleimid vorzugsweise teilweise stattfindet, und wobei mindestens 10%, vorzugsweise mindestens 30% und weiter bevorzugt mindestens 50% oder sogar mindestens 70% der Maleinsäureanhydridgruppen in dem Copolymer in Maleimid umgewandelt werden.

9. Polymeres Dispergiermittel nach einem der vorhergehenden Ansprüche, wobei ein Teil der zweiten Wiederholungseinheiten mit dem ersten Substituenten substituiert wird und ein anderer Teil der zweiten Wiederholungseinheiten mit einem zweiten Substituenten substituiert wird.

10. Polymeres Dispergiermittel nach einem der vorhergehenden Ansprüche, wobei das Molverhältnis zwischen dem zweiten Monomer und dem ersten Monomer im Bereich von 0,3 bis 7, vorzugsweise 0,9 bis 5, weiter bevorzugt 1 bis 5 liegt.

**11.** Verfahren zur Herstellung eines polymeren Dispergiermittels nach einem der vorhergehenden Ansprüche mit den Schritten

- Bereitstellen von mindestens einem ersten Monomer als einem ethylenisch ungesättigten Monomer mit der Struktur $YHC=CH_2$, einem zweiten Monomer als einer Maleinsäureanhydridverbindung, die wahlweise an einer Position 2 und/oder Position 3 substituiert ist, sowie einer Aminoverbindung mit der Struktur $Z-NH_2$, wobei Z ein erster Substituent mit einer im Wesentlichen nichtpolaren Kette ist und Y ein zweiter Substituent ist, der mehr polar als der erste Substituent ist und mindestens ein aus Schwefel (S) und Sauerstoff (O) ausgewähltes Heteroatom umfasst,
- Copolymerisieren des ersten Monomers und des zweiten Monomers, sowie
- Umwandeln von zumindest einem Teil von Maleinsäureanhydrid in ein substituiertes Maleimid durch Reaktion mit der Aminoverbindung, wobei die zumindest teilweise Umwandlung des Maleinsäureanhydrids entweder vor der Copolymerisierung oder nach der Copolymerisierung stattfinden kann, wobei im letzteren Fall das umzuwandelnde Maleinsäureanhydrid als Maleinsäureanhydrideinheiten in dem Copolymer vorliegt.

**12.** Verwendung des polymeren Dispergiermittels nach einem der Ansprüche 1 bis 10 als ein Dispersionsmittel in einer Tintenstrahldispersion, die eine wässrige und/oder alkoholische Trägerflüssigkeit aufweist.

**13.** Tintenstrahldispersion mit einem Farbstoff, einer wässrigen und/oder alkoholischen Trägerflüssigkeit und einem polymeren Dispergiermittel nach einem der Ansprüche 1 bis 10, welche ein Copolymer mit ersten und zweiten Wiederholungseinheiten ist, die jeweils einen Substituenten enthalten, wobei die zweiten Einheiten N-substituierte Maleimideinheiten sind, wobei das Copolymer durch Copolymerisieren von mindestens einem Monomer als einem ethylenisch ungesättigten Monomer und einem aus einer Maleimidverbindung und einer Maleinsäureanhydridverbindung ausgewählten zweiten Monomer, wobei die Verbindungen wahlweise an einer Position 2 und/oder Position 3 substituiert sind, und, im Falle, dass das zweite Monomer eine Maleinsäureanhydridverbindung ist, Umwandeln von zumindest einem Teil der resultierenden Maleinsäureanhydrideinheiten in die zweiten N-substituierten Maleimideinheiten erhältlich ist, wobei die zweite Wiederholungseinheit einen ersten Substituenten mit einer im Wesentlichen nicht polaren Kette umfasst und wobei die erste Wiederholungseinheit einen zweiten, mehr polaren Substituenten umfasst, welcher mindestens ein aus Schwefel (S) und Sauerstoff (O) ausgewähltes Heteroatom umfasst, und vorzugsweise, wobei das polymere Dispergiermittel zumindest teilweise an eine Oberfläche des Farbstoffs angelagert ist, insbesondere vor und während des Druckens, bis ein Schmelzschritt durchgeführt wird.

**14.** Verwendung der Dispersion nach Anspruch 13 zum Drucken.

## Revendications

**1.** Dispersant polymère, qui est un copolymère comprenant des premières et secondes unités répétitives, chacune supportant un substituant, lesquelles secondes unités répétitives étant des unités maléimide N-substituées et, en variante, davantage substituées, lequel copolymère peut être obtenu par :

copolymérisation d'au moins un premier monomère qui est un monomère éthyléniquement insaturé et d'un second monomère choisi à partir d'un composé maléimide N-substitué et d'un composé d'anhydride maléique, lesquels composés sont, en variante, substitués en position 2 et/ou 3, et conversion d'au moins une partie des unités d'anhydride maléique résultantes en unités maléimide N-substituées, dans le cas dans lequel le second monomère est de l'anhydride maléique, dans lequel la seconde unité répétitive comprend un premier substituant comportant une chaîne sensiblement non polaire et dans lequel la première unité répétitive comprend un second substituant plus polaire qui comprend au moins un hétéroatome choisi à partir du soufre (S) et de l'oxygène (O).

**2.** Dispersant polymère selon la revendication 1, dans lequel l'hétéroatome est présent sous la forme d'au moins un thiol, un sulfonyle, un sulfinyle, un éther et oligo-(oxyde d'alkylene), dans lequel l'alkylène est choisi à partir d'éthylène, de propylène et de butylènes.

**3.** Dispersant polymère selon la revendication 2, dans lequel le second substituant comprend un oligo-(oxyde d'alkylene), dans lequel l'alkylène est choisi à partir d'éthylène, de propylène et de butylènes, dans lequel, de préférence, l'oligo-(oxyde d'alkylene) est un copolymère d'oxyde d'éthylène et d'oxyde de propylène.

4. Dispersant polymère selon les revendications 1 à 3, dans lequel le premier monomère est choisi à partir du groupe des éthers de vinyle, esters de vinyle et amides de vinyle.

5. Dispersant polymère selon la revendication 4, dans lequel le premier monomère présente la formule (I)

$$YHC=CH_2 \qquad (I),$$

dans laquelle
Y = $OR_1$, $OC(=O)-R_1$, $NR_2C(=O)R_1$, Y étant le second substituant plus polaire
$R_1$ = alkyle en $C_1$ à $C_{24}$ substitué, cycloalkyle en $C_2$ à $C_{24}$, alcène en $C_2$ à $C_{24}$, cycloalcène en $C_2$ à $C_{24}$, arylalkyle, alkoxyalkyle, dans lequel le substituant du (cyclo)alkyle, (cyclo)alcène, arylalkyle, alkoxyalkyle substitué est, de préférence, choisi à partir du groupe amino, sulfonyle, sulfinyle, thiol, thioéther, éther, lesquels substituants peuvent, en outre, contenir un ou plusieurs groupes alkyles, tels qu'un alkyle en $C_1$ à $C_4$, un oligo(oxyde d'alkylene en $C_2$ à $C_4$) ;
$R_2$ = alkyle en $C_1$ à $C_5$.

6. Dispersant polymère selon la revendication 5, dans lequel $R_1$ est choisi à partir de l'alkyle en $C_1$ à $C_{10}$ substitué, dans lequel le substituant de l'alkyl substitué est, de préférence, choisi à partir du groupe $XR_3R_4$ et oligo(oxyde d'alkylene en $C_2$ à $C_4$), dans lequel X est choisi à partir d'amino, sulfonyle, sulfinyle, thiol, thioéther, d'éther et $R_3$, $R_4$ représentent H ou un alkyl en $C_1$ à $C_4$, et/ou dans lequel $XR_3R_4$ forment ensemble un groupe cyclique choisi à partir d'un hétéroalkyle et hétéroaryle.

7. Dispersant polymère selon l'une quelconque des revendications précédentes, dans lequel le premier substituant à la maléimide est choisi à partir de l'alkyle en $C_8$ à $C_{24}$, de l'alkyle alkyl- ou aryl- substitué.

8. Dispersant polymère selon les revendications 1 à 7, dans lequel le second monomère est de l'anhydride maléique et dans lequel l'anhydride maléique est converti au moins partiellement en maléimide N-substituée après copolymérisation, dans lequel la conversion de l'anhydride maléique en maléimide N-substituée est, de préférence, partielle, et dans lequel au moins 10%, de préférence, au moins 30%, et plus préférablement au moins 50% ou même au moins 70% des groupes d'anhydride maléique dans le copolymère sont convertis en maléimide.

9. Dispersant polymère selon l'une quelconque des revendications précédentes, dans lequel une partie des secondes unités répétitives est substituée avec le premier substituant et une autre partie des secondes unités répétitives est substituée avec un second substituant.

10. Dispersant polymère selon l'une quelconque des revendications précédentes, dans lequel le rapport molaire entre le second monomère et le premier monomère est compris dans la plage de 0,3 à 7, de préférence, de 0,9 à 5, plus préférablement, de 1 à 5.

11. Procédé de préparation d'un dispersant polymère selon l'une quelconque des revendications précédentes comprenant les étapes de
fourniture d'au moins un premier monomère qui est un monomère éthyléniquement insaturé présentant la structure $YHC=CH_2$, d'un second monomère qui est un composé d'anhydride maléique, qui est, en variante, substitué en position 2 et/ou 3, et d'un composé amino présentant la structure $Z-NH_2$, dans lesquelles Z est un premier substituant comportant une chaîne sensiblement non polaire et Y est un second substituant qui est plus polaire que le premier substituant et comprend au moins un hétéroatome choisi à partir du soufre (S) et de l'oxygène (O) ;
copolymérisation du premier monomère et du second monomère, et
conversion d'au moins une partie d'anhydride maléique en maléimide substituée par réaction avec le composé amino, dans lequel la conversion au moins partielle de l'anhydride maléique peut se produire avant copolymérisation ou après copolymérisation, un dernier cas dans lequel l'anhydride maléique à convertir est présent sous la forme d'unités d'anhydride maléique dans le copolymère.

12. Utilisation du dispersant polymère selon l'une quelconque des revendications 1 à 10 comme agent de dispersion dans une dispersion pour jet d'encre comportant un liquide support aqueux et/ou alcoolique.

13. Dispersion pour jet d'encre comprenant un colorant, un liquide support aqueux et/ou alcoolique et un dispersant polymère, selon l'une quelconque des revendications 1 à 10, qui est un copolymère comprenant des premières et secondes unités répétitives chacune supportant un substituant, lesquelles secondes unités étant des unités maléimide N-substituées, lequel copolymère pouvant être obtenu par copolymérisation d'au moins un premier monomère qui est un monomère éthyléniquement insaturé et d'un second monomère choisi à partir d'un composé maléimide et d'un composé d'anhydride maléique, lesquels composés étant, en variante, substitués en position 2 et/ou 3, et, dans le cas où le second monomère est un composé d'anhydride maléique, par conversion d'au moins une partie des unités d'anhydride maléique résultantes en des secondes unités maléimide N-substituées, dans laquelle la seconde unité répétitive comprend un premier substituant comportant une chaîne sensiblement non polaire et dans laquelle la première unité répétitive comprend un second substituant plus polaire, qui comprend au moins un hétéroatome choisi à partir du soufre (S) et de l'oxygène (O), et, de préférence, dans laquelle le dispersant polymère est au moins partiellement adsorbé sur une surface du colorant, en particulier, avant et pendant l'impression jusqu'à mise en œuvre d'une étape de fusion.

14. Utilisation de la dispersion selon la revendication 13 en impression.

FIG. 1

FIG. 1 continued

**EP 3 571 236 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1449893 A1
- EP 1650269 A2
- EP 1650273 A2
- EP 14174812 A

**Non-patent literature cited in the description**

- **BRANDRUP J. ; IMMERGUT E.H. ; GRULKE, E.A.** Polymer Handbook. 2003